# EUROPEAN PATENT APPLICATION

(11) **EP 2 284 236 A1**
(43) Date of publication of application: **16.02.2011**
(21) Application number: 09731484.3
(22) Date of filing: 16.04.2009
(51) Int. Cl.: C09J 7/02, C09J 9/02, C09J 201/00, H01B 1/22

(54) **ADHESIVE MATERIAL TAPE AND ADHESIVE MATERIAL TAPE WOUND BODY**

(30) Priority: 17.04.2008 JP 2008107838
(71) Applicant: Hitachi Chemical Company, Ltd., Tokyo 163-0449 (JP)
(72) Inventor: YANAGAWA, Toshiyuki, Chikusei-shi Ibaraki 308-8524 (JP); FUJINAWA, Tohru, Chikusei-shi Ibaraki 308-8524 (JP); HONDA, Tomoyasu, Chikusei-shi Ibaraki 308-8524 (JP)
(74) Representative: HOFFMANN EITLE
(86) International application number: PCT/JP2009/057682
(87) International publication number: WO 2009/128514

(57) **Abstract**

The adhesive material tape 10 of the invention comprises a tape-like support 1 having a first side F1 and a second side F2 opposite it, and an adhesive layer 2 comprising adhesive components 2a and formed on the first side F1 of the support 1, wherein the second side F2 of the support 1 has a maximum height Ry of at least 1 µm based on measurement of the two-dimensional surface roughness.

## Description

### Technical Field

The present invention relates to an adhesive material tape and to its wound body.

### Background Art

Anisotropic conductive films (ACF) are used as connecting materials for electrical connection between members to be connected bearing multiple electrodes. Anisotropic conductive films serve the purpose of electrical connection and mechanical anchoring during connection of connection members including semiconductor elements such as IC or LSI, and packages, on boards such as printed wiring boards, LCD glass panels or flexible printed boards, in order to maintain conduction between opposing electrodes and to maintain insulation between adjacent electrodes.

An anisotropic conductive film is made from an adhesive composition comprising adhesive components including a thermosetting resin, and conductive particles added as necessary, and they are formed as films on a support such as a polyethylene terephthalate film (PET). More specifically, an adhesive layer is formed on a support to a width of about 10-50 cm, and then taken up once to form a supply roll and continuously cut to a width of about 0.5-5 mm while being reeled off, to obtain an adhesive material tape. The adhesive material tape is then taken up onto a winding core to produce an adhesive material reel.

Thermosetting resins employing epoxy resins, which have high adhesion and high reliability, have been most commonly used in the prior art as adhesive components for anisotropic conductive films (see Patent document 1, for example). Radical curing adhesives have also been of interest because of the high reactivity of radical reactive species and the short time in which curing can be accomplished (see Patent documents 2 and 3, for example). Radical curing adhesives employ combinations of acrylate derivatives or methacrylate derivatives, and peroxides as radical polymerization initiators.

### Citation List

### Patent documents

[Patent document 1] Japanese Unexamined Patent Application Publication HEI No. 01-113480
[Patent document 2] Japanese Unexamined Patent Application Publication No. 2002-203427
[Patent document 3] International Patent Publication No. WO98/044067

### Summary of Invention

### Problem to be Solved by the Invention

Incidentally, when an adhesive material tape wound up on a reel is used, it is necessary to pull out the adhesive material tape from the reel to the location where the adhesive layer is to be placed. The adhesive material tape is partially anchored with a roller or clamp before and after the location where the adhesive layer is to be placed. If the pulling tension of the adhesive material tape is high, anchoring by the roller or clamp tends to be insufficient, and the adhesive material tape may move or slip from the prescribed position. In such cases, a problem occurs in that the attachment position of the adhesive layer becomes shifted and the adhesive layer cannot be precisely situated at the prescribed position.

The present invention has been accomplished in light of this problem, and its object is to provide an adhesive material tape, and its wound body, which are useful for situating an adhesive layer composed of an adhesive composition at a prescribed position with sufficiently high precision.

### Means for Solving Problem

The invention provides an adhesive material tape comprising: a tape-like support having a first side and a second side opposite it; and an adhesive layer comprising adhesive components and formed on the first side of the support, wherein the second side of the support has a maximum height Ry of at least 1 µm by measurement of the two-dimensional surface roughness. The adhesive material tape has a maximum height Ry of at least 1 µm on the second side of the support, or in other words, it has microirregularities on the support surface on which the adhesive layer is not formed, and the surface thus has suitable roughness. Consequently, sufficiently high friction force is produced at the location of contact with a roller, clamp or the like, and sliding of the adhesive material tape can be prevented. Even when the adhesive material tape has been pulled out with high tension, it is possible to place the adhesive layer at the prescribed position with a sufficiently high degree of precision.

According to the invention, the adhesive layer preferably further comprises conductive particles dispersed in the adhesive components. By dispersing conductive particles in the adhesive components, the adhesive material tape can be suitably used as a connecting material (anisotropic conductive film or isotropic conductive film) for connection between circuit members. Since the adhesive layer can be placed at the prescribed position with a sufficiently high degree of precision, it is possible to minimize trouble and increase production efficiency during production of electronic devices.

The present invention provides a wound body comprising the aforementioned adhesive material tape wound around itself. Preparing the adhesive material tape as a wound body results in superior handleability and facilitates its supply to bonding apparatuses, compared to a sheet.

### Effect of the Invention

According to the invention it is possible to place an adhesive layer comprising an adhesive composition at prescribed locations with a sufficiently high degree of precision.

### Brief Description of Drawings

Fig. 1 is a cross-sectional view showing an embodiment of an adhesive material tape according to the invention.
Fig. 2 is a perspective view showing an embodiment of an adhesive material tape wound body according to the invention.
Fig. 3 is a graph showing an example of the measurement results for the two-dimensional surface roughness of a support.
Fig. 4 is a simplified cross-sectional view showing an example of a circuit connection structure wherein circuit electrodes are connected.
Fig. 5 is a process drawing in a simplified cross-sectional view, showing an example of a method for producing a circuit connection structure.
Fig. 6 is a graph showing measurement results for the two-dimensional surface roughness of the support used in Example 1.
Fig. 7 is a graph showing measurement results for the two-dimensional surface roughness of the support used in Comparative Example 1.

### Description of Embodiments

### <Adhesive material tape>

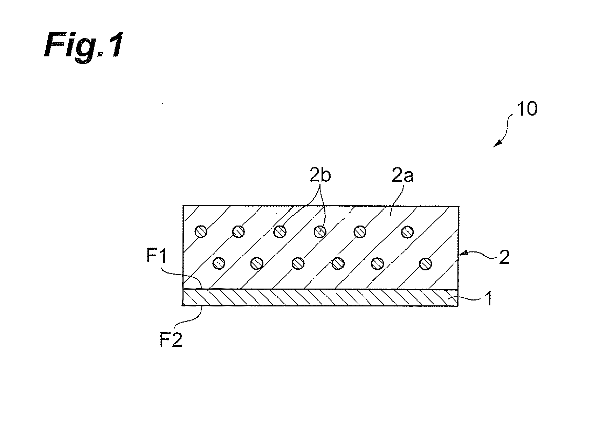

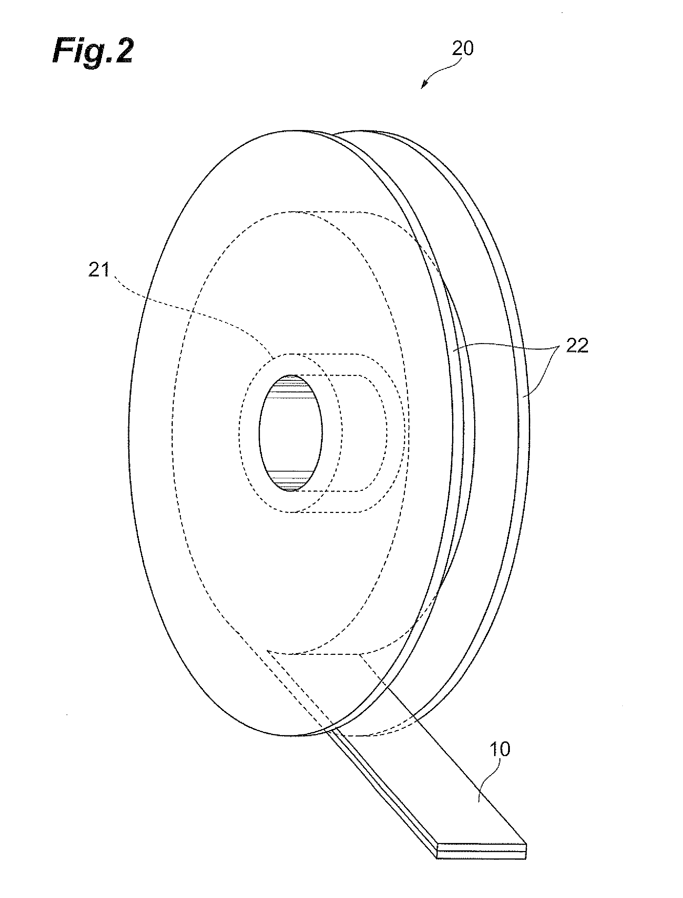

As shown in Fig. 1 the adhesive material tape 10 of this embodiment comprises a tape-like support 1 having a first side F1 and a second side F2 on the opposite side, and an adhesive layer 2 comprising adhesive components 2a and formed on the first side F1 of the support 1. The adhesive material reel (wound body) 20 shown in Fig. 2 is formed by winding the adhesive material tape 10 around itself into a tubular winding core 21. Circular side walls 22 are provided on either side of the winding core 21.

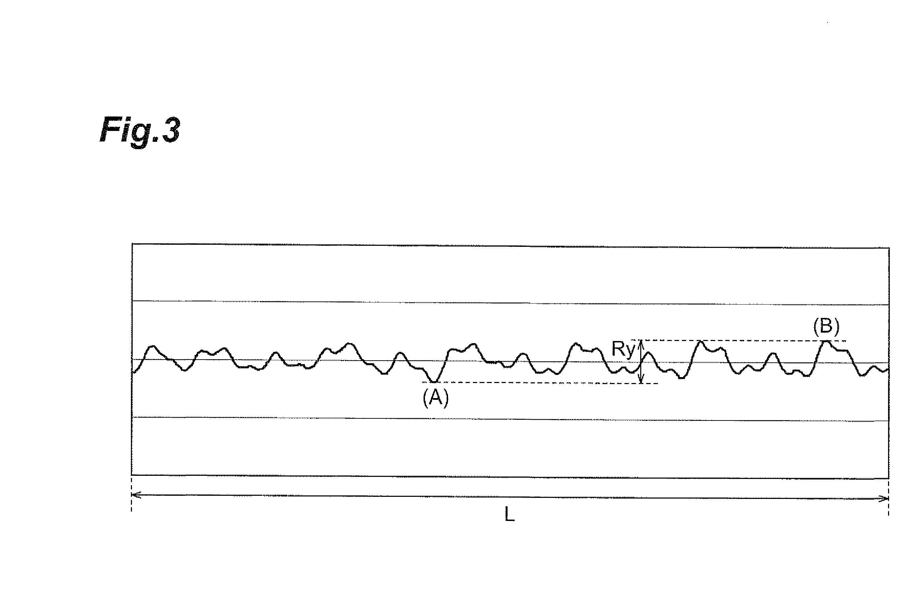

The second side F2 of the support 1 has a maximum height (Ry) of at least 1 µm, based on measurement of the two-dimensional surface roughness. Fig. 3 is a graph showing an example of the measurement results for the two-dimensional surface roughness of the support 1. The two-dimensional surface roughness of the support 1 can be measured by a method according to JIS B0601(1994). As shown in Fig. 3, the maximum height (Ry) is the height from the minimum valley (A) to the maximum peak (B), for each reference length (L). A larger value represents greater concavoconvexity of the surface, while a value closer to zero represents lower concavoconvexity of the surface, and thus a smoother surface.

The maximum height (Ry) of the second side F2 is preferably at least 1 µm, more preferably at least 1.2 µm and even more preferably at least 1.5 µm, as mentioned above. The maximum height (Ry) of the second side F2 is also preferably no greater than 10 µm and more preferably no greater than 5 µm. If the maximum height (Ry) of the second side F2 is less than 1 µm, anchoring with a roller or clamp will be insufficient when high tension is used to pull the adhesive material tape 10 out from the adhesive material reel 20. As a result, the attachment position of the adhesive layer 2 will become shifted and it will not be possible to situate the adhesive layer 2 at the prescribed position with sufficient precision. On the other hand, if the maximum height (Ry) of the second side F2 is greater than 10 µm, the support 1 will have greater thickness variation and the quality of the adhesive material tape 10 will tend to be reduced. The maximum height (Ry) of the support 1 can be appropriately adjusted by selecting the material of the support 1, and by surface treatment or the like. Surface treatment of the support 1 is releasing treatment for facilitated release of the support 1 from the adhesive layer 2, or treatment to impart characteristic properties to the support 1 itself, such as electrostatic treatment or conductive treatment. The method used for releasing treatment may be a known treatment method such as silicone treatment, non-silicone treatment or fluorine treatment. The release property can be increased or reduced by the material treated, or the throughput.

The adhesive material tape 10 can be obtained by forming an adhesive layer on a film-like support to a width of about 10-50 cm, and then taking it up first to form a supply roll and, reeling it off while continuously cutting it to a width of about 0.5-5 mm. When the supply roll is to be cut to a prescribed width, preferably the edge of a cutting blade is directed toward the inside of the width of the adhesive material tape, and the cutting blade is penetrated from the support side to the adhesive layer side. Alternatively, the edge of a cutting blade may be directed toward the outside of the width of the adhesive material tape, and the cutting blade penetrated from the adhesive layer side to the support side. Cutting in this manner will prevent the adhesive layer 2 from seeping from the support 1.

The support 1 used may be a film, such as a polyethylene terephthalate film, polyethylene naphthalate film, polyethylene isophthalate film, polybutylene terephthalate film, polyolefin-based film, polyacetate film, polycarbonate film, polyphenylene sulfide film, polyamide film, ethylene-vinyl acetate copolymer film, polyvinyl chloride film, polyvinylidene chloride film, synthetic rubber film, liquid crystal polymer film or the like. Of these, a polyethylene terephthalate film is preferably used as the support 1 from the viewpoint of preventing twisting and bending during cutting, and from the viewpoint of strength.

The thickness of the support 1 is not particularly restricted, but it is preferably 30-100 µm from the viewpoint of tape strength and maintaining tape length during preparation of the wound body. The support 1 width may be greater than the width of the adhesive layer 2, and it is preferably 0.5-20 mm, for example.

The thickness of the adhesive layer 2 is not particularly restricted but is preferably 5-100 µm. If the thickness of the adhesive layer 2 is less than 5 µm the mechanical anchoring between circuit members will tend to be insufficient, and if it is greater than 100 µm the electrical connection between opposing electrodes will tend to be insufficient. The adhesive layer 2 width may be narrower than the width of the support 1, and it is preferably 0.5-20 mm, for example.

### (Adhesive components)

The adhesive layer 2 is preferably made of an adhesive composition comprising a thermoplastic resin (a), a radical polymerizing compound (b) and a radical generator (c), as adhesive components 2a. The adhesive layer 2 comprising these components is preferred because it can exhibit sufficiently high levels of both short-time adhesion and high connection reliability.

Examples of the thermoplastic resin (a) include phenoxy resins, polyvinyl formal resins, polystyrene resins, polyvinyl butyral resins, polyester resins, polyamide resins, xylene resins and polyurethane resins. These resins are known as film-forming materials. A film-forming material is a material which, when a liquid substance is solidified as a structural composition and formed into a film, confers properties that prevent tearing, cracking or sticking and facilitates handling of the film. Phenoxy resins are preferred among the aforementioned resins because of their excellent adhesion, compatibility, heat resistance and mechanical strength. A phenoxy resin may be obtained either by reacting a bifunctional phenol with epichlorohydrin to a high molecular weight, or by polyaddition of a bifunctional epoxy resin and a bifunctional phenol.

Specifically, a phenoxy resin may be obtained by reacting 1 mol of a bifunctional phenol with 0.985-1.015 mol of epichlorohydrin in a non-reactive solvent at a temperature of 40-120°C, in the presence of an alkali metal hydroxide. From the viewpoint of mechanical properties and thermal properties, it is more preferred to use a phenoxy resin obtained in the following manner from a bifunctional epoxy resin and bifunctional phenol. Specifically preferred is a phenoxy resin obtained by preparing a bifunctional epoxy resin and a bifunctional phenol to a mixing equivalent ratio (epoxy group/phenolhydroxyl group) of 1/0.9-1/1.1, and conducting polyaddition reaction in an organic solvent in the presence of a catalyst, to a reaction solid content of no greater than 50 parts by weight. In this case, the reaction temperature is preferably 50-200°C. The catalyst used may be an alkali metal compound, an organic phosphorus-based compound or a cyclic amine-based compound. As organic solvents there are preferably used amide-based, ether-based, ketone-based, lactone-based or alcohol-based solvents with boiling points of 120°C or higher.

Bifunctional epoxy resins include bisphenol A-type epoxy resins, bisphenol F-type epoxy resins, bisphenol AD-type epoxy resins, bisphenol S-type epoxy resins, biphenyldiglycidyl ethers and methyl-substituted biphenyldiglycidyl ethers. Bifunctional phenols have two phenolic hydroxyl groups, and examples include hydroquinones, and bisphenols such as bisphenol A, bisphenol F, bisphenol AD, bisphenol S, bisphenolfluorene, methyl-substituted bisphenolfluorene, dihydroxybiphenyl and methyl-substituted dihydroxybiphenyl. The phenoxy resin may be modified with radical-polymerizing functional groups or with other reactive compounds. A phenoxy resin may be used alone, or two or more different ones may be used in combination.

The radical polymerizing compound (b) is a substance having functional groups that polymerize by radicals. Specific examples include acrylates, methacrylates, maleimide compounds and styrene derivatives. The radical polymerizing compound may be used as a monomer or oligomer, or a monomer and oligomer may be used in combination.

Specific examples of acrylates or methacrylates include methyl acrylate, ethyl acrylate, isopropyl acrylate, isobutyl acrylate, ethyleneglycol diacrylate, diethyleneglycol diacrylate, trimethylolpropane triacrylate, tetramethylolmethane tetraacrylate, 2-hydroxy-1,3-diacryloxypropane, 2,2-bis[4-(acryloxymethoxy)phenyl]propane, 2,2-bis[4-(acryloxypolyethoxy)phenyl]propane, dicyclopentynyl acrylate, tricyclodecanyl acrylate, ethylene isocyanurate oxide-modified diacrylate, ethylene isocyanurate oxide-modified triacrylate, urethane acrylates, and the methacrylates corresponding to these acrylates. These may be used alone or in combinations, and if necessary polymerization inhibitors such as hydroquinone or methyl ether hydroquinones may be used as appropriate. A compound having at least one group selected from among dicyclopentynyl, tricyclodecanyl and triazine rings is preferred for improved heat resistance.

Maleimide compounds include those containing two or more maleimide groups in the molecule, examples of which are 1-methyl-2,4-bismaleimidebenzene, N,N'-m-phenylenebismaleimide, N,N'-p-phenylenebismaleimide, N,N'-m-toluilenebismaleimide, N,N'-4,4-biphenylenebismaleimide, N,N'-4,4-(3,3'-dimethyl-biphenylene)bismaleimide, N,N'-4,4-(3,3'-dimethyldiphenylmethane)bismaleimide, N,N'-4,4-(3,3'-diethyldiphenylmethane)bismaleimide, N,N'-4,4-diphenylmethanebismaleimide, N,N'-4,4-diphenylpropanebismaleimide, N,N'-3,3'-diphenylsulfonebismaleimide, N,N'-4,4-diphenyl etherbismaleimide, 2,2-bis(4-(4-maleimidephenoxy)phenyl)propane, 2,2-bis(3-s-butyl-4,8-(4-maleimidephenoxy)phenyl)propane, 1,1-bis(4-(4-maleimidephenoxy)phenyl)decane, 4,4'-cyclohexylidene-bis(1-(4-maleimidephenoxy)-2-cyclohexylbenzene and 2,2-bis(4-(4-maleimidephenoxy)phenyl)hexafluoropropane. A single maleimide compound may be used alone, or two or more may be used in admixture.

The radical generator (c) is a compound that decomposes to generate free radicals upon overheating. The radical generator (c) used may be a peroxide compound, azo-based compound or the like, appropriately selected according to the desired connection temperature, connection time and pot life. From the viewpoint of high reactivity and pot life, an organic peroxide with a 10 hour half-life temperature of 40°C or higher and a 1 minute half-life temperature of no higher than 180°C is preferred, and an organic peroxide with a 10 hour half-life temperature of 60°C or higher and a 1 minute half-life temperature of no higher than 170°C is more preferred. From the viewpoint of achieving a short connection time (up to 10 seconds, for example), the radical generator (c) content is preferably 0.1-30 parts by weight and more preferably 1-20 parts by weight with respect to 100 parts by weight as the total of the thermoplastic resin (a) and the radical polymerizing compound (b). If the radical generator (c) content is less than 0.1 part by weight, a sufficient reaction rate will not be obtainable and it may be difficult to achieve satisfactory bonding strength or low connection resistance. If the radical generator (c) content is greater than 30 parts by weight, on the other hand, the flow property of the adhesive component may be reduced, the connection resistance increased and the pot life of the adhesive component shortened.

Examples for the radical generator (c) include diacyl peroxides, peroxy dicarbonates, peroxy esters, peroxy ketals, dialkyl peroxides, hydroperoxide and silyl peroxide. In order to prevent corrosion of the connecting terminals of the circuit member, the chloride ion and organic acid contents are preferably no greater than 5000 ppm. The radical generator (c) is preferably selected from among peroxy esters, peroxy ketals, dialkyl peroxides, hydroperoxides and silyl peroxides, and more preferably selected from among peroxy esters and peroxy ketals, which have high reactivity.

Diacyl peroxides include isobutyl peroxide, 2,4-dichlorobenzoyl peroxide, 3,5,5-trimethylhexanoyl peroxide, octanoyl peroxide, lauroyl peroxide, stearoyl peroxide, succinic peroxide, benzoylperoxytoluene and benzoyl peroxide.

Peroxy dicarbonates include di-n-propylperoxy dicarbonate, diisopropylperoxy dicarbonate, bis(4-t-butylcyclohexyl)peroxy dicarbonate, di-2-ethoxymethoxyperoxy dicarbonate, di(2-ethylhexylperoxy)dicarbonate, dimethoxybutylperoxy dicarbonate and di(3-methyl-3methoxybutylperoxy)dicarbonate.

Peroxy esters include cumylperoxy neodecanoate, 1,1,3,3-tetramethylbutylperoxy neodecanoate, 1-cyclohexyl-1-methylethylperoxy neodecanoate, t-hexylperoxy neodecanoate, t-butylperoxy pivalate, 1,1,3,3-tetramethylbutylperoxy-2-ethyl hexanonate, 2,5-dimethyl-2,5-di(2-ethylhexanoylperoxy)hexane, 1-cyclohexyl-1-methylethylperoxy-2-ethyl hexanonate, t-hexylperoxy-2-ethyl hexanonate, t-butylperoxy-2-ethyl hexanonate, t-butylperoxy isobutyrate, 1,1-bis(t-butylperoxy)cyclohexane, t-hexylperoxyisopropyl monocarbonate, t-butylperoxy-3,5,5-trimethyl hexanonate, t-butylperoxy laurate, 2,5-dimethyl-2,5-di(m-toluoylperoxy)hexane, t-butylperoxyisopropyl monocarbonate, t-butylperoxy-2-ethylhexyl monocarbonate, t-hexylperoxybenzoate and t-butylperoxy acetate.

Peroxy ketals include 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-(t-butylperoxy)cyclododecane and 2,2-bis(t-butylperoxy)decane.

Dialkyl peroxides include α,α'-bis(t-butylperoxy)diisopropylbenzene, dicumyl peroxide, 2,5-dimethyl-2,5-di(t-butylperoxy)hexane and t-butylcumyl peroxide.

Hydroperoxides include diisopropylbenzene hydroperoxide and cumene hydroperoxide.

Silyl peroxides include t-butyltrimethylsilyl peroxide, bis(t-butyl)dimethylsilyl peroxide, t-butyltrivinylsilyl peroxide, bis(t-butyl)divinylsilyl peroxide, tris(t-butyl)vinylsilyl peroxide, t-butyltriallylsilyl peroxide, bis(t-butyl)diallylsilyl peroxide and tris(t-butyl)allylsilyl peroxide.

The radical generator (c) may be one of the compounds mentioned above, or a mixture of two or more thereof. A trigger, inhibitor or the like may also be combined with the radical generator (c). The radical generator (c) is preferably used in a microencapsulated form by coating with a polyurethane-based or polyester-based macromolecular compound, in order to obtain an extended pot life.

The adhesive components 2a may also include a filler, softening agent, accelerator, age inhibitor, flame retardant, pigment, thixotropic agent, coupling agent, phenol resin, melamine resin, isocyanate or the like. Including a filler is preferred to improve the connection reliability. The content of the filler is preferably 5-60 parts by volume with respect to 100 parts by volume of the adhesive component. If the filler content is less than 5 parts by volume, the effect of the filler will tend to be insufficient, while if it is greater than 60 parts by volume the effect of improved reliability will tend to be saturated. The maximum diameter of the filler must be less than the particle size of the conductive particles 2b explained hereunder.

When a coupling agent is to be combined with the adhesive components 2a, the content is preferably 0.5-30 parts by weight with respect to 100 parts by weight of the adhesive composition. A coupling agent content of less than 0.5 part by weight will tend to result in an inadequate effect of the coupling agent. A coupling agent content of greater than 30 parts by weight, on the other hand, will tend to impede formation of the adhesive layer 2 on the support 1 and lower the film thickness precision.

Preferred coupling agents, from the viewpoint of adhesion, are selected from among those containing ketimine, vinyl, acrylic, amino, epoxy and isocyanate groups. Specific acrylic group-containing silane coupling agents include (3-methacryloxypropyl)trimethoxysilane, (3-acryloxypropyl)trimethoxysilane, (3-methacryloxypropyl)dimethoxymethylsilane and (3-acryloxypropyl)dimethoxymethylsilane. Specific amino group-containing silane coupling agents include N-β(aminoethyl)γ-aminopropyltrimethoxysilane, N-β(aminoethyl)γ-aminopropylmethyldimethoxysilane, γ-aminopropyltriethoxysilane and N-phenyl-γ-aminopropyltrimethoxysilane. Specific ketimine group-containing silane coupling agents include those obtained by reaction of ketone compounds such as acetone, methyl ethyl ketone and methyl isobutyl ketone with the aforementioned amino group-containing silane coupling agents.

The adhesive components 2a may be a thermoplastic resin (a), an epoxy resin (d) and a latent curing agent (e). Adhesive components 2a including these components can produce circuit connection structures having circuit members bonded together with high strength.

Examples of (d) epoxy resins include bisphenol-type epoxy resins derived from epichlorohydrin and bisphenol A, F or AD, epoxy-novolac resins derived from epichlorohydrin and phenol-novolac or cresol-novolac, naphthalene-based epoxy resins having naphthalene ring-containing backbones, and glycidylamine, glycidyl ether, and epoxy compounds with two or more glycidyl groups in a glycidylamine, glycidyl ether, biphenyl or alicyclic compound. Any of these compounds may be used alone, or two or more thereof may be used in combination. From the viewpoint of preventing electron migration, the epoxy resin used preferably has an impurity ion (Na⁺, Cl⁻, etc.) or hydrolyzable chlorine content reduced to below 300 ppm.

The (e) latent curing agent may be an imidazole-based agent, hydrazide-based agent, boron trifluoride-amine complex, sulfonium salt, amineimide, polyamine salt, dicyandiamide curing agent, or the like. Any of these compounds may be used alone, or two or more thereof may be used in combination. They may also be used in combination with triggers, inhibitors and the like. These curing agents are preferably used in microencapsulated form by coating with a polyurethane-based or polyester-based macromolecular compound. This will allow the pot life to be extended. In order to obtain a sufficient reaction rate, the latent curing agent (e) content is preferably 0.1-60 parts by weight and more preferably 1-20 parts by weight with respect to 100 parts by weight as the total of the thermoplastic resin (a) and epoxy resin (d). If the latent curing agent (e) content is less than 0.1 part by weight, a sufficient reaction rate will not be obtainable and it may be difficult to achieve satisfactory bonding strength or low connection resistance. If the latent curing agent (e) content is greater than 60 parts by weight, the flow property of the adhesive composition will tend to be reduced, the connection resistance increased and the pot life of the adhesive composition shortened.

The adhesive components 2a may include a polymer or copolymer having at least one monomer component selected from among acrylic acid, acrylic acid esters, methacrylic acid esters and acrylonitrile. In this case, it is preferred to also use a copolymer-based acrylic rubber containing glycidyl acrylate or glycidyl methacrylate with a glycidyl ether group, for excellent stress relaxation. The (weight-average) molecular weight of the acrylic rubber is preferably at least 200,000 from the viewpoint of increasing the cohesion of the adhesive layer 2.

Using adhesive components 2a including abundant monomer components or low-molecular-weight polymer components with molecular weights of below 5000 will tend to increase the tack strength of the adhesive layer 2 surface, because these are usually liquid or viscous liquids at ordinary temperature. The tension will thus tend to be increased when the adhesive material tape 10 is pulled out from the adhesive material reel 20. Even in such cases, since the adhesive material tape 10 has fine concavoconvexities in the second side F2 and suitable roughness, sufficiently large friction force is produced at points of contact with the roller or clamp, so that sliding of the adhesive material tape 10 can be minimized.

### (Conductive particles)

The adhesive composition composing the adhesive layer 2 preferably comprises conductive particles 2b dispersed in the adhesive components 2a. As shown in Fig. 1, the adhesive layer 2 comprising conductive particles 2b can provide more stable electrical connection in the circuit connection structure 100 described hereunder, compared to one comprising no conductive particles 2b. Even if the adhesive layer 2 does not comprise conductive particles 2b but consists entirely of the adhesive components 2a, electrical connection can be ensured so long as the opposing circuit electrodes are in direct contact.

The conductive particles 2b may be particles of metals such as Au, Ag, Pt, Ni, Cu, W, Sb, Sn or solder, or carbon particles. The mean particle size of the conductive particles 2b is preferably 1-18 µm from the viewpoint of dispersibility and conductivity. The mixing proportion of the conductive particles 2b is preferably 0.1-30 parts by volume and more preferably 0.1-10 parts by volume with respect to 100 parts by volume of the adhesive component. The mixing proportion is appropriately adjusted according to the intended use of the adhesive composition. If the mixing proportion of the conductive particles 2b is less than 0.1 part by volume the connection resistance between opposing electrodes will tend to be higher, and if it is greater than 30 parts by volume there will tend to be more shorting between adjacent electrodes.

From the viewpoint of obtaining an adequate pot life, the surfaces of the conductive particles 2b are preferably not formed of a transition metal such as Ni or Cu, but rather of a precious metal such as Au, Ag or a platinum group metal, and are more preferably formed of Au. The conductive particles 2b may also have a layer of a transition metal such as Ni covered with a precious metal such as Au. The conductive particles 2b may also have the surfaces of the nonconductive glass, ceramic, plastic or the like covered with a conductive layer, with a layer composed of a precious metal further formed on the outermost layer.

The conductive particles 2b may be particles that deform by heat and pressure, such as particles comprising a conductive layer on the surface of plastic particles, or heat-fusible metallic particles such as solder. Using such particles can increase the contact area with electrodes during connection while absorbing thickness variation of the circuit terminals of the circuit member and improving connection reliability.

When a conductive layer composed of a precious metal is provided on the surfaces of plastic particles, the thickness of the conductive layer is preferably at least 10 nm. A conductive layer thickness of less than 10 nm will tend to increase the connection resistance of the circuit connection structure. When a layer made of a transition metal such as Ni is further covered with a precious metal, the thickness of the layer made of the precious metal is preferably at least 30 nm. A precious metal layer thickness of less than 30 nm will tend to cause the transition metal to be exposed more readily by loss of the covering layer. When the transition metal becomes exposed on the surfaces of the conductive particles 2b, free radicals are produced by oxidation-reduction, making it difficult for the adhesive composition to be stored for prolonged periods. The upper limit for the covering layer thickness is about 1 µm.

The conductive particles 2b may be covered on the surfaces with an insulating resin, or they may have insulating fine particles adhering thereto. When conductive particles 2b having such a structure are used, it is possible to minimize shorting by contact between the particles, and to improve the insulating property between electrode circuits. A single type of conductive particles 2b may be used, or multiple types may be used in combination.

### (Circuit connection structure)

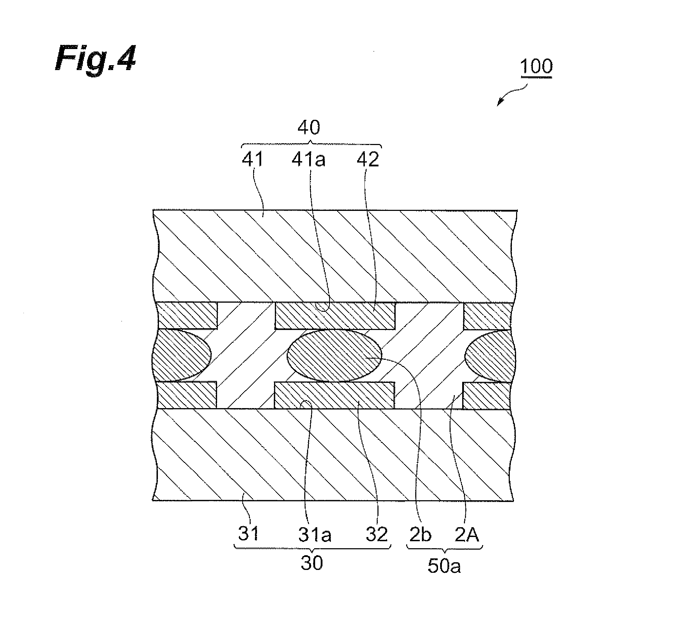

A circuit connection structure produced using the adhesive layer 2 of the adhesive material tape 10 as the circuit connecting material will now be explained. Fig. 4 is a simplified cross-sectional view showing a circuit connection structure wherein circuit electrodes are connected. The circuit connection structure 100 shown in Fig. 4 comprises a first circuit member 30 and second circuit member 40 which are mutually opposing. A joint 50a is provided between the first circuit member 30 and second circuit member 40, connecting them.

The first circuit member 30 comprises a circuit board 31, and a circuit electrode 32 formed on the main side 31 a of the circuit board 31. The second circuit member 40 comprises a circuit board 41, and a circuit electrode 42 formed on the main side 41a of the circuit board 41.

Specific examples of circuit members include chip parts such as semiconductor chips (IC chips), resistor chips and condenser chips. These circuit members have circuit electrodes, and ordinarily have multiple circuit electrodes. Specific examples of other circuit members to which these circuit members are connected include flexible tapes, or circuit boards such as flexible printed circuit boards with metal wirings and glass substrates that have been vapor deposited with indium tin oxide (ITO). The adhesive material tape 10 of this embodiment can also be applied for COG mounting or COF mounting of chip parts with numerous microterminals (circuit electrodes) onto circuit boards.

The surface of each of the circuit electrodes 32, 42 may be composed of one metal, or two or more metals, selected from among gold, silver, tin, ruthenium, rhodium, palladium, osmium, iridium, platinum and indium tin oxide (ITO). The materials for the surfaces of the circuit electrodes 32, 42 may be the same or different for all of the circuit electrodes.

The joint 50a comprises the cured product 2A of the adhesive components 2a in the adhesive layer 2, and conductive particles 2b dispersed therein. In the circuit connection structure 100, the opposing circuit electrode 32 and circuit electrode 42 are electrically connected via the conductive particles 2b. That is, the conductive particles 2b directly contact with both of the circuit electrodes 32, 42. This adequately reduces the connection resistance between the circuit electrodes 32, 42, allowing satisfactory electrical connection to be established between the circuit electrodes 32, 42. The cured product 2A, on the other hand, is electrically insulating, and therefore insulation is ensured between adjacent circuit electrodes. Consequently, smooth current flow can be achieved between the first and second circuit electrodes 32, 42, to allow the function of the circuit to be adequately exhibited.

### (Method for producing circuit connection structure)

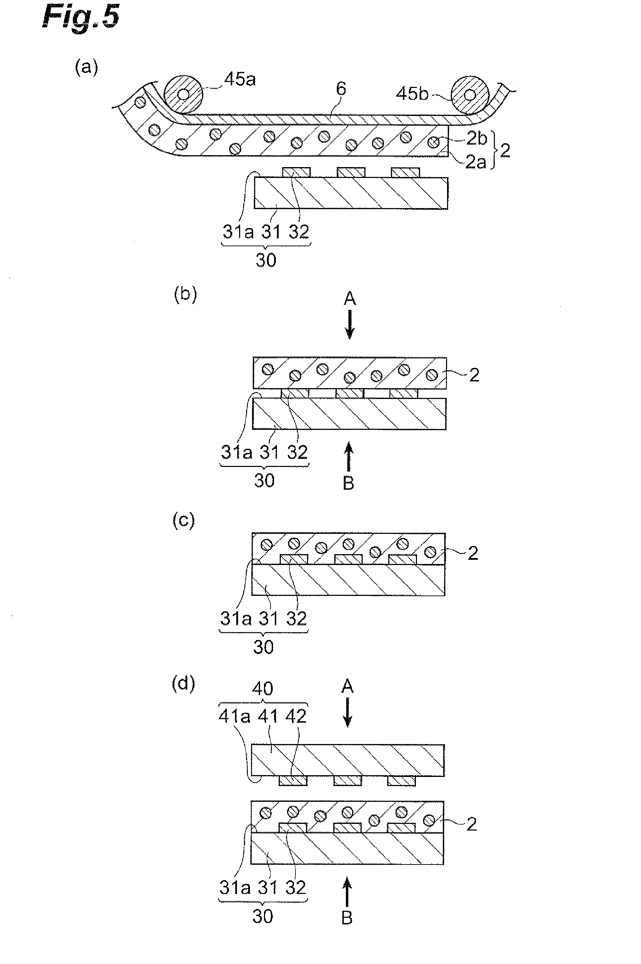

A method for producing the circuit connection structure 100 will now be described. Fig. 5 is a process drawing in a simplified cross-sectional view, showing an embodiment of a method for producing a circuit connection structure. According to this embodiment, the adhesive layer 2 of the adhesive material tape 10 is thermoset, and finally a circuit connection structure 100 is produced.

First, an adhesive material reel 20 is mounted on the rotation axis of a connecting apparatus (not shown). The adhesive material tape 10 is pulled out from the adhesive material reel 20 with the adhesive layer 2 facing downward. The adhesive material tape 10 is anchored by rollers 45a, 45b of the connecting apparatus to situate the adhesive material tape 10 at the prescribed position on the main side 31a of the first circuit member 30 (Fig. 5(a)). The support 1 is then released, while the adhesive layer 2 is cut to the prescribed length and placed on the main side 31a of the circuit member 30 (Fig. 5(b)).

Pressure is then applied in the direction of the arrows A and B in Fig. 5(b), for temporary connection of the adhesive layer 2 to the first circuit member 30 (Fig. 5(c)). The pressure used in most cases for this procedure is preferred to be 0.1-30.0 MPa, although it is not particularly restricted so long as it is in a range that does not damage the circuit member. The pressure may be applied while heating, and the heating temperature should be a temperature that essentially does not cause curing of the adhesive layer 2. The heating temperature is usually preferred to be 50-190°C. The heating and pressing are preferably carried out for a period in the range of 0.5-120 seconds.

Next, as shown in Fig. 5(d), the second circuit member 40 is placed on the adhesive layer 2 with the second circuit electrode 42 facing the first circuit member 30. The adhesive layer 2 is pressed in the direction of the arrows A and B in Fig. 5(d) while heating. The heating temperature at this time is a temperature at which the adhesive components 2a of the adhesive layer 2 can be cured. The heating temperature is preferably in the range of 60-180°C, more preferably in the range of 70-170°C and even more preferably in the range of 80-160°C. If the heating temperature is below 60°C the curing speed will tend to be slowed, and if it is above 180°C there will be a tendency for secondary reactions to occur. The heating time is preferably 0.1-180 seconds, more preferably 0.5-180 seconds and even more preferably 1-180 seconds.

Curing of the adhesive components 2a forms a joint 50a, to obtain a circuit connection structure 100 as shown in Fig. 4. The conditions for the connection may be appropriately selected depending on the purpose of use, the adhesive composition and the circuit member. When a component that cures by light is used as the adhesive component of the adhesive layer 2, the adhesive layer 2 may be appropriately irradiated with active light rays or energy rays. Active light rays include ultraviolet rays, visible light and infrared rays. Energy rays include electron beams, X-rays, γ-rays and microwaves.

Since the second side F2 of the support 1 in the adhesive material tape 10 of this embodiment has concavoconvexities, sufficiently large friction force is produced at points of contact between the second side F2 and the rollers 45a, 45b. Sliding of the adhesive material tape 10 can therefore be minimized, and even when the adhesive material tape 10 has been pulled out with high tension, it is possible to place the adhesive layer 2 at the prescribed position with a sufficiently high degree of precision. Once the adhesive material tape 10 has been attached to the circuit member 30, the adhesive layer 2 becomes transferred thus making reattachment impossible, and therefore placement with high precision at the prescribed location can reduce loss of the adhesive material tape 10.

### Examples

The present invention will now be explained in detail by examples, with the understanding that the invention is not limited to the examples.

### (Measurement of two-dimensional surface roughness)

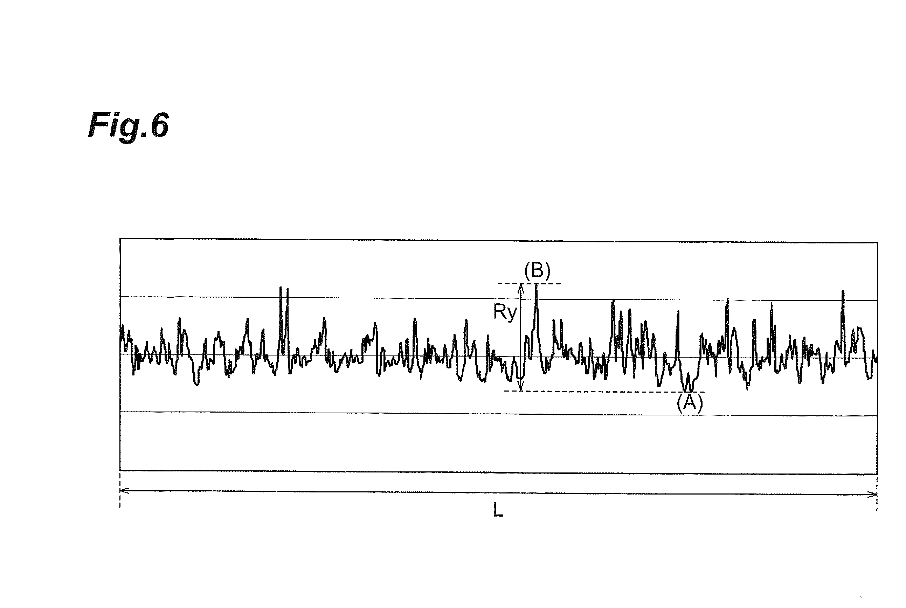

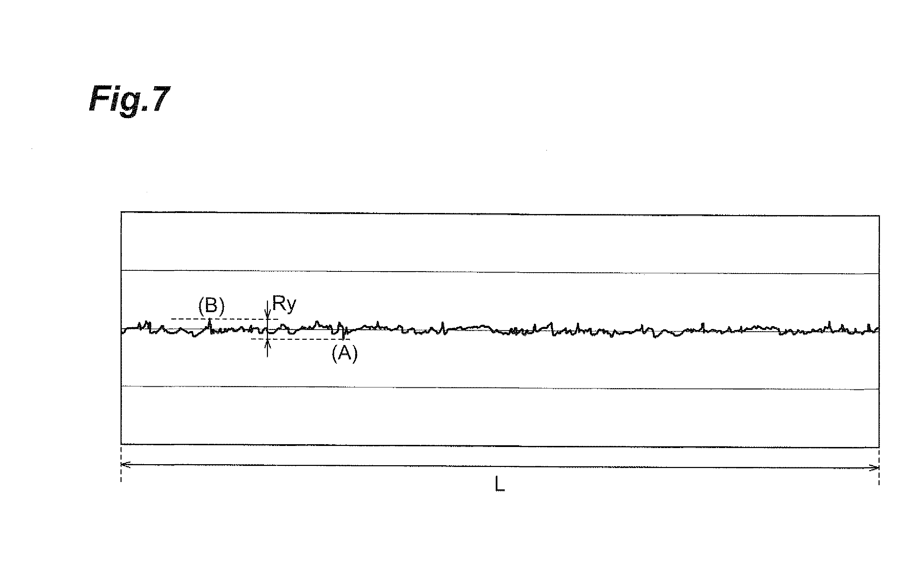

Three different types of polyethylene terephthalate films (80 µm thickness) were prepared, and the two-dimensional surface roughness was measured on the surfaces without the formed adhesive layer. The two-dimensional surface roughness was measured using a surface roughness measuring instrument (trade name: SURFCORDER SE-3500 by Kosaka Laboratory, Ltd.). The measuring length L was 30 mm and the feeding speed was 1 mm/s, and the maximum height (Ry) from the minimum valley (A) to the maximum peak (B) within the region of the measuring length L was measured in the lengthwise direction of each film. The results are shown in Table 1. Fig. 6 and Fig. 7 are graphs showing the measurement results for the two-dimensional surface roughness of film 1 and film 3.

### (Evaluation of support surface slipping)

Each of the films 1 to 3 was cut out to a size of 5 mm width and 20 mm length to prepare measuring samples. Each measuring sample was held between clips above and below in the lengthwise direction of the measuring sample. With the lower clip anchored, the upper clip was pulled in the vertical direction at a constant speed, and the force at which the clip separated was recorded. The force was measured using a TENSILON UTM-4 by Toyo Baldwin Co., Ltd.. The measuring conditions were a speed of 50 mm/min and a measuring length of 15 mm. The results are shown in Table 1.

**[Table 1]**

| | Film 1 | Film 2 | Film 3 |
|---|---|---|---|
| Two-dimensional surface roughness | ∼4 µm | ∼2.5 | ∼0.7 µm |
| Force (N/m) | 1350 | 1080 | 580 |

### (Example 1)

A solution was prepared with the composition shown in Table 2, and the solution was coated onto the silicone released-treated surface (first side) of the film 1. Next, the solvent was evaporated off by hot air drying at 70°C for 10 minutes to obtain an adhesive material film comprising an adhesive layer (30 µm thickness) formed on the film 1. The adhesive material film was supplied to a wound body-forming apparatus to form an adhesive material tape wound body with a width of 10 mm and a wound length of 50 m.

**[Table 2]**

| Component | Content | Remark |
|---|---|---|
| Bisphenol A-skeleton phenoxy resin | 50 parts by wt. | Weight-average molecular weight: 45,000 |
| Acrylate resin | 50 parts by wt. | |
| Peroxide | 5 parts by wt. | |
| Conductive particles | 3 parts by volume | Mean particle size: 10 µm |
| Methyl ethyl ketone (solvent) | q.s. | |

"Bisphenol A backbone phenoxy resin" in Table 2 indicates a bifunctional bisphenol A-type epoxy resin that had been high-molecularized by a prescribed method. "Peroxide" indicates a 50 wt% DOP (dioctyl phthalate) solution of t-hexylperoxy-2-ethyl hexanonate (trade name: PERCURE HO by NOF Corp.). "Conductive particles" indicates particles produced by forming a nickel layer to a thickness of 0.2 µm on the surfaces of polystyrene nucleus particles, and further forming a gold layer to a thickness of 0.04 µm on the outside thereof.

### (Example 2)

An adhesive material film and adhesive material tape wound body were produced in the same manner as Example 1, except that film 2 was used instead of film 1.

### (Comparative Example 1)

An adhesive material film and adhesive material tape wound body were produced in the same manner as Example 1, except that film 3 was used instead of film 1.

### (Evaluation of adhesive layer attachment)

The wound bodies prepared in Examples 1 and 2 and Comparative Example 1 were each mounted in a connecting apparatus and the adhesive material tape was pulled out at a pull tension of 1N. The adhesive layer was attached across a length of 40 mm to glass (1.1 mm thickness, surface resistance: 20 Ω/sq.) with a 0.2 µm-thick ITO layer formed thereon. The attachment of the adhesive layer was carried out by heated pressing for 3 seconds, at a temperature of 70°C and a pressure of 1 MPa.

The attachment operation was carried out 30 times for each wound body. As a result, the wound bodies of Examples 1 and 2 had absolutely no shifting of their attachment position. In contrast, the wound body of Comparative Example 1 had an attachment position shift of 0.2 mm in the widthwise direction, occurring 6 out of 30 times.

### Reference Sings List

1: Support, 2: adhesive layer, 2a: adhesive component, 2b: conductive particles, 10: adhesive material tape, 20: adhesive material reel, 100: circuit connection structure, A: minimum valley, B: maximum peak, L: reference length, Ry: maximum height.

## Claims

1. An adhesive material tape comprising:
a tape-like support having a first side and a second side opposite it; and
an adhesive layer comprising adhesive components and formed on the first side of the support,
wherein the second side of the support has a maximum height Ry of at least 1 µm based on measurement of the two-dimensional surface roughness.

2. The adhesive material tape according to claim 1, wherein the adhesive layer further comprises conductive particles dispersed in the adhesive components.

3. The adhesive material tape wound body comprising an adhesive material tape according to claim 1 or 2 wound around itself.
